# EUROPÄISCHE PATENTSCHRIFT

(11) **EP 0 669 760 B1**
(45) Veröffentlichungstag und Bekanntmachung des Hinweises auf die Patenterteilung: **29.12.1999**
(21) Anmeldenummer: 95101901.7
(22) Anmeldetag: 13.02.1995
(51) Int. Cl.: H04N 5/445, H04N 5/765

(54) **Empfänger mit einer Vorrichtung zur Erzeugung einer individuellen Programmvorschau**
Receiver with a device for the generation of an individual program preview
Récepteur avec un dispositif pour générer une prévisualisation individuelle de programmes

(30) Priorität: 25.02.1994 DE 4406091
(43) Veröffentlichungstag der Anmeldung: 30.08.1995
(73) Patentinhaber: GRUNDIG Aktiengesellschaft, 90762 Fürth (DE)
(72) Erfinder: Hegendörfer, Max, Grundig E.M.V., D-90762 Fürth (DE)

(56) Entgegenhaltungen:
- EP-A- 0 401 930
- EP-A- 0 438 291
- WO-A-91/00670
- DE-A- 3 909 334
- GB-A- 2 034 995
- GB-A- 2 179 771
- US-A- 5 179 439
- US-A- 5 223 924
- US-A- 5 323 240
- RESEARCH DISCLOSURE, Nr. 362, 30.Juni 1994 HAVANT GB, Seite 306 XP 000461264 'SELF-LEARNING PROGRAM PROPOSAL FEATURE IN A TIMER PROGRAMMING APPLICATION IN A VCR'

## Beschreibung

Die Erfindung betrifft einen Empfänger zur Erzeugung einer individuellen Programmvorschau aus Signalen, die einer Programmübersicht über eine Vielzahl von Fernsehprogrammen entsprechen und im Zeitmultiplex mit digitalen Fernsehsignalen übertragen werden.

Derzeit erfolgt in der Fernsehtechnik ein Übergang von analogen zu digitalen Übertragungssystemen. In diesem Zusammenhang wird auch die Satellitenübertragung umgestellt. Mittels eines Quellencodierverfahrens nach dem MPEG-Standard ist eine Datenkompression möglich, die eine besonders effiziente Übertragung zuläßt. Während in der analogen Technik auf einem Satellitentransponder von beispielsweise 33 MHz Bandbreite bisher ein Fernsehprogramm übertragen wird, ist mit der digitalen Technik eine Verteilung von 5 - 10 Programmen gleicher Qualität auf dem gleichen Transponder möglich. Mittels mehrerer Transponder kann folglich eine unüberschaubare Vielzahl von Fernsehprogrammen übertragen werden.

Diese Vielfalt von Programmen erfordert einen Multiplex mit geeigneter Verwaltung der Daten. Auch dieser Aspekt ist im MPEG-Standard geregelt. Hier wird vorgesehen, die Datenströme in Blöcke aufzuteilen, die im Zeitmultiplex übertragen werden. Ein Programm besteht aus mehreren Datenströmen unterschiedlicher Art (Videoinformation, Audioinformation, Hilfsinformation), den sogenannten elementaren Datenströmen. Die elementaren Datenströme eines Programms werden in einem Programmmultiplexer zu einem Programmdatenstrom zusammengefügt. Verschiedene Programmdatenströme werden in einem Transportmultiplexer zum Transportdatenstrom zusammengesetzt. Die einzelnen Datenblöcke, die beispielsweise eine Länge von 188 Byte haben können, werden jeweils mit Synchronisations- und Identifikationsbytes versehen, um dem Empfänger die Auswahl der richtigen Blöcke zur Decodierung und Darstellung der Information auf einem Fernsehempfänger zu ermöglichen.

Der Transportdatenstrom wird beispielsweise beim Programmanbieter zusammengesetzt und dann über einen sogenannten Uplink zum Satelliten übertragen. Dieser setzt das Signal um und verteilt es für den Satellitendirektempfang beim Zuschauer.

Eine Information des Fernsehzuschauers über diese Vielzahl von Fernsehprogrammen mittels herkömmlicher Femsehzeitungen würde den Umfang dieser Fernsehzeitungen in nicht mehr vertretbarem Maß ansteigen lassen. Weiterhin wäre die Übersichtlichkeit über das Fernsehprogramm nicht mehr gegeben.

Aus DE-A-39 09 334 ist eine Schaltung zum ausgewählten Empfang bzw. Aufzeichnung vorbestimmter Rundfunk- und/oder Fernsehsendungen mittels einer codierten Information bekannt. Es ist ein erster Programmdatenspeicher vorgesehen, der erste codierte Daten und Datumsdaten enthält und einen Eingang aufweist, der mit einem Ausgang eines ersten Adressierers verbunden ist. Im weiteren weist dieser einen Ausgang auf, der mit einem ersten Eingang eines ersten Komparators verbunden ist. Der erste Komparator seinerseits weist einen Ausgang auf, der mit einem Eingang einer Schaltung verbunden ist, die zum Auslösen von Schaltvorgängen bei Rundfunk-, Fernseh- und/oder Aufnahmegeräten führt oder eine entsprechende Anzeige auslöst. Desweiteren ist ein weiterer Programmdatenspeicher vorgesehen, der verschiedene Aus- und Eingänge aufweist, wobei ein Eingang mit einem Ausgang eines weiteren Adressierers, ein Ausgang mit einem Eingang einer Übertragungsschaltung und ein Ausgang mit einem Eingang eines weiteren Komparators verbunden ist. Der weitere Programmdatenspeicher enthält codierte Daten, Datumsdaten und zusätzlich den codierten Daten und Datumsdaten zugeordnete Bewertungsdaten. Der weitere Komparator weist einen weiteren Eingang aufweist, der mit einem Ausgang eines Benutzerbewertungsprofilspeichers verbunden ist, wobei der Benutzerbewertungsprofilspeicher einen Eingang auf, der mit dem Ausgang einer Eingabevorrichtung verbunden ist. Die Übertragungsschaltung weist einen Ausgang auf, der mit einem Eingang des ersten Programmdatenspeichers verbunden ist, um die codierten Daten und Datumsdaten, die mit den Daten des weiteren Komparators übereinstimmen, aus dem weiteren Programmdatenspeicher auf den ersten zu übertragen.

Nachteilig hierbei ist, daß eine aufwendige Schaltung notwendig ist um eine individuelle Programmvorschau zu erstellen. Außerdem ist der für zukünftige, auf digitalen Verfahren beruhende, Übertragungstechniken notwendige Zeit- und Speicheraufwand nicht tragbar.

Die Aufgabe der Erfindung besteht darin, einen neuen Weg aufzuzeigen, wie einem Fernsehzuschauer bei dieser Vielzahl von Fernsehprogrammen schnell ein übersichtlicher und aktualisierter Programmüberblick zur Verfügung gestellt werden kann.

Diese Aufgabe wird durch die in den Patentansprüchen angegebenen Merkmale gelöst.

Die Vorteile der Erfindung bestehen insbesondere darin, daß der Empfänger ständig und automatisch aus einer über den Fernsehsignalübertragungsweg im Zeitmultiplex mit digitalen Fernsehsignalen übertragene Programmübersicht eine an das individuelle Interessenprofil eines Zuschauers angepaßte Programmvorschau erstellt und diese im Empfänger abgespeichert, so daß sie bei Bedarf sofort abrufbar ist. Diese individuelle Programmvorschau kann beispielsweise als vom Empfänger erstellter Programmvorschlag in Form einer alphanumerischen Auflistung von fünf Femsehsendungen, die noch am selben Tag ausgestrahlt werden, am Bildschirm eines Fernsehempfängers dargestellt werden, so daß dem Benutzer ein mühsames Durchsehen einer wie auch immer ausgestalteten Programmzeitung erspart bleibt.

Die in den Ansprüchen 2 und 3 angegebenen Realisierungsformen haben den Vorteil, daß das individuelle Interessenprofil, unter Verwendung dessen die Recheneinheit des Empfängers den Programmvorschlag erstellt, durch den Benutzer mittels der Bedieneinheit vorgebbar ist.

Bei der im Anspruch 4 angegebenen Ausgestaltung ermittelt die Recheneinheit das individuelle Interessenprofil automatisch durch Auswertung der Sehgewohnheiten des Benutzers, so daß eine manuelle Eingabe des Interessenprofils nicht notwendig ist.

Mittels des im Anspruch 5 angegebenen Empfängers wird der Benutzer auf den bevorstehenden Beginn einer ihn interessierenden Sendung aufmerksam gemacht.

Die Vorteile des im Anspruch 6 angegebenen Empfängers bestehen darin, daß der Benutzer immer dann, wenn er dies wünscht, die Anzeige der individuellen Programmvorschau bewirken kann.

Beim Empfänger gemäß Anspruch 7 erfolgt die Anzeige der individuellen Programmvorschau nach dem Einschalten des Empfängers automatisch, ohne daß es einer Tastenbetätigung seitens des Benutzers bedarf.

Mittels des Empfängers gemäß Anspruch 8 wird sichergestellt, daß der Benutzer eine ihn interessierende Sendung nicht versäumt. Dies wird dadurch erreicht, daß bei bereits eingeschaltetem Empfänger eine Umschaltung auf die interessierende Sendung erfolgt und bei nicht eingeschaltetem Empfänger, d.h. bei einem Empfänger, der sich im Bereitschaftsbetrieb befindet, eine Aufzeichnung der Sendung auf einen Aufzeichnungsträger durchgeführt wird.

Der Vorteil des Empfängers mit den im Anspruch 9 angegebenen Merkmalen besteht darin, daß die individuelle Programmvorschau beispielsweise mittels eines Druckers ausgedruckt werden kann, so daß sie druckschriftlich zur Verfügung steht.

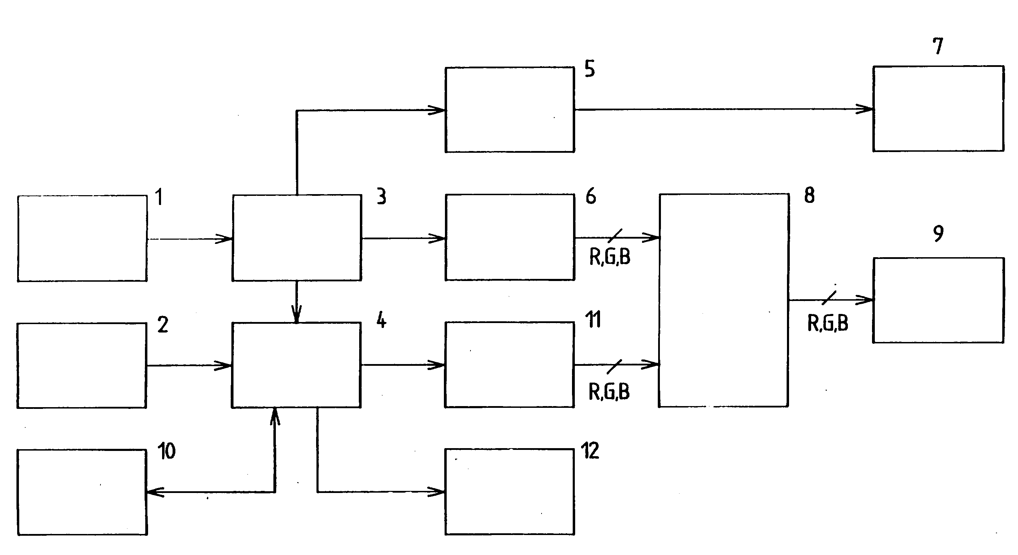

Im folgenden wird die Erfindung beispielhaft anhand der Figur näher erläutert.

Diese zeigt einen Fernsehempfänger mit einem Empfangsteil 1, einer Bedieneinheit 2, einem Demultiplexer 3, einer Recheneinheit 4, einer Audiosignalverarbeitungsschaltung 5, einer Videosignalverarbeitungsschaltung 6, einer Lautsprechereinheit 7, einer Eintastschaltung 8, einem Bildschirm 9, einer Speichereinheit 10, einem DOS-Baustein 11 (display on screen) und einer Anzeige 12, beispielsweise einer Leuchtdiode.

Das Empfangsteil 1 stellt an seinem Ausgang einen Datenstrom zur Verfügung, der gemäß dem MPEG-Standard aufgebaut ist und im Zeitmultiplex digitale Bild-, Ton- und Datensignale einer Vielzahl von Fernsehprogrammen enthält.

In diesem Datenstrom sind gemäß der Erfindung Signale enthalten, die einer Programmübersicht über die Vielzahl von Fernsehprogrammen entsprechen und für jedes Fernsehprogramm Kennungen enthalten. Bei diesen Kennungen handelt es sich um Klassifizierungskriterien, die jede einzelne Sendung als besonders sehenswert, sehenswert, durchschnittlich oder weniger sehenswert und/oder als zu einem bestimmten Thema gehörig kennzeichnen. Mögliche Themen sind Nachrichten, Kultur, Sport, Politik, Spielfilme, usw..

Im Demultiplexer 3 erfolgt eine Trennung der einzelnen Signale voneinander. Die Videosignale werden der Videosignalverarbeitungsschaltung 6 und von dort aus in Form von R,G,B-Signalen der Eintastschaltung 8 zugeführt. Die Audiosignale werden der Audiosignalverarbeitungsschaltung 5 zugeführt und von dort an die Lautsprechereinheit 7 weitergeleitet. Die Signale, die der Programmübersicht über die Vielzahl von Fernsehprogrammen entsprechen, werden der Recheneinheit 4, bei der es sich um einen Mikrocomputer handelt, zugeführt.

Die Recheneinheit ermittelt, wenn sich der Empfänger im eingeschalteten Zustand oder im Bereitschaftsbetrieb befindet, ständig und automatisch, ob in der ihr zugeführten Programmübersicht Sendungen enthalten sind, die zu einem individuellen Interessenprofil eines Benutzers gehören.

Die Daten, die dem individuellen Interessenprofil des Benutzers entsprechen, werden gemäß einer ersten Ausgestaltung der Erfindung vom Benutzer einmalig nach der ersten Inbetriebnahme des Empfängers mittels der Bedieneinheit 2 eingegeben und in einem nicht gezeichneten Speicher der Recheneinheit 4 abgespeichert. Beispielsweise gehören dem individuellen Interessenprofil des Benutzers alle Spielfilme an, die gemäß der Kennung als besonders sehenswert einklassifiziert sind.

Die Recheneinheit 4 selektiert demnach gemäß dem vorgenannten Beispiel aus der ihr zugeführten Programmübersicht die beispielsweise fünf als besonders relevant klassifizierten Spielfilme, die ausgehend von der Momentanzeit als nächstes gesendet werden und legt die zugehörigen Daten in Form einer individuellen Programmvorschau in der nichtflüchtigen Speichereinheit 10 ab.

Gemäß einer vorteilhaften Weiterbildung der Erfindung können mittels der Bedieneinheit 2 von mehreren Benutzern individuelle Interessenprofile eingegeben werden. Dazu wird der Recheneinheit 4 neben den Daten, die dem jeweiligen individuellen Interessenprofil entsprechen, mittels der Bedieneinheit 2 auch eine Benutzerkennung zugeführt. Der spätere Abruf der jeweils gewünschten individellen Programmvorschau erfolgt ebenfalls unter Verwendung der zugehörigen Benutzerkennung.

Gemäß einer weiteren Ausgestaltung der Erfindung ist die Recheneinheit 4 werksseitig derart programmiert, daß sie im späteren Gerätebetrieb beim Benutzer durch Auswertung der Sehgewohnheiten des Benutzers automatisch Daten ermittelt, die dem individuellen Interessenprofil des Benutzers entsprechen. Dazu mißt die Recheneinheit 4 die Betrachtungsdauer der Programme der verschiedenen Themen, addiert die Betrachtungsdauer der verschiedenen Themen jeweils zur Erstellung eines Histogramms auf und ermittelt daraus die dem individuellen Interessenprofil entsprechenden Daten. Diese werden dann - wie oben bereits beschrieben - zur Ermittlung der individuellen Programmvorschau verwendet.

Weiterhin ist die Recheneinheit 4 werksseitig derart programmiert, daß sie im späteren Gerätebetrieb beim Benutzer ständig die Anfangszeiten der in der Speichereinheit 10 abgespeicherten Sendungen, die dem individuellen Interessenprofil des Benutzers zugehören, mit der Momentanzeit vergleicht. Die Anfangszeit der Sendung und weitere sendungsbezogene Daten, die ebenfalls im Rahmen der Programmvorschau übertragen werden, sind ebenfalls in der Speichereinheit 10 abgespeichert. Unterschreitet die ermittelte Zeitdifferenz einen vorgegebenen Schwellwert, der beispielsweise eine Stunde betragen kann, dann erzeugt die Recheneinheit 4 ein Steuersignal für die Lautsprechereinheit 7 und/oder die Leuchtdiode 12, so daß der Benutzer akustisch und/oder optisch auf den bevorstehenden Beginn einer seinem Interessenprofil zugehörigen Sendung aufmerksam gemacht wird. Die Momentanzeit erhält die Recheneinheit durch eine im Empfänger enthaltene Echtzeituhr oder durch Echtzeitsignale, die über den Fernsehübertragungskanal vom Sender zum Empfänger übertragen werden.

Die Bedieneinheit 2 des Empfängers weist eine Taste auf, bei deren Betätigung die in der Speichereinheit 10 abgespeicherte individuelle Programmvorschau auf dem Bildschirm 9 dargestellt wird. Diese Darstellung wird von der Recheneinheit 4, die den eingegebenen Bedienbefehl erkennt, durch Ansteuerung des DOS-Bausteins 11 initiiert. Die vom DOS-Baustein 11 zur Verfügung gestellten R,G,B-Signale, die der individuellen Programmvorschau entsprechen, werden über die Eintastschaltung 8 dem Bildschirm 9 zugeführt.

Gemäß einer vorteilhaften Weiterbildung der Erfindung wird unter Steuerung durch die Recheneinheit 4 nach dem Einschalten des Empfängers aus dem ausgeschalteten Zustand oder dem Bereitschaftsbetrieb die in der nichtflüchtigen Speichereinheit 10 abgespeicherte individuelle Programmvorschau automatisch auf dem Bildschirm 9 dargestellt. Dadurch wird der Benutzer - ohne weitere Bedienbefehle eingeben zu müssen - über bevorstehende Sendungen informiert, die seinem individuellen Interessenprofil angehören.

Weiterhin erkennt die Recheneinheit 4 automatisch, ob zum Zeitpunkt des Beginns einer dem individuellen Interessenprofil des Benutzers zugehörigen Sendung der Empfänger zum Empfang dieser Sendung eingeschaltet ist oder nicht. Ist dies nicht der Fall, initiiert die Recheneinheit 4 eine Ein- und/oder Umschaltung des Empfängers zur Wiedergabe der genannten Sendung auf dem Bildschirm oder zur Aufzeichnung der genannten Sendung auf einem Aufzeichnungsträger. Dadurch wird beispielsweise erreicht, daß der Empfänger, der gerade zur Wiedergabe einer für den Benutzer wenig interessanten Sendung eingestellt ist, automatisch auf den Empfang der dem individuellen Interessenprofil des Benutzers zugehörigen Sendung umgeschaltet wird, so daß der Benutzer den Beginn dieser Sendung nicht verpaßt. Weiterhin kann dadurch beispielsweise erreicht werden, daß im Falle der Abwesenheit des Benutzers eine dem individuellen Interessenprofil des Benutzers zugehörige Sendung auf einen Aufzeichnungsträger aufgezeichnet wird, so daß der Benutzer die Sendung zeitversetzt vollständig betrachten kann. Der Vorteil dieses Merkmals besteht darin, daß eine Aufzeichnung erfolgt, ohne daß der Benutzer ein Aufzeichnungsgerät, beispielsweise einen Videorecorder, im Sinne einer Aufzeichnungsprogrammierung programmieren muß.

Weiterhin ist die Recheneinheit 4 derart programmiert, daß sie in Ansprache auf einen Bedienbefehl Signale, die der individuellen Programmvorschau entsprechen, an einem Ausgang des Empfängers zur Verfügung stellt. Ist an diesen Ausgang beispielsweise ein Drucker angeschlossen, hat der Benutzer die Möglichkeit, sich seine individuelle Programmvorschau in Papierform ausdrucken zu lassen.

Ein weiterer Vorteil der Erfindung besteht darin, daß dem Benutzer stets eine aktualisierte individuelle Programmvorschau zur Verfügung steht, da die Recheneinheit 4 die Daten derjenigen Sendungen, deren Ausstrahlung bereits beendet ist, in der Speichereinheit 10 löscht und stattdessen die Daten einer weiteren Sendung, deren Ausstrahlung noch bevorsteht, in die Speichereinheit 10 aufnimmt.

Selbstverständlich ist es auch möglich, die Anzahl der Sendungen, die der individuellen Programmvorschau des Benutzers angehören, d.h. deren Daten in der Speichereinheit 10 abgespeichert sind, kleiner oder größer zu wählen als oben beschrieben. Weiterhin kann sich die individuelle Programmvorschau auch auf ein vom Benutzer vorgebbares Zeitintervall erstrecken. Auch kann der Zeitpunkt, zu dem der Benutzer optisch oder akustisch auf den bevorstehenden Beginn einer dem individuellen Interessenprofil zugehörigen Sendung aufmerksam gemacht wird, anders gewählt werden als beim oben beschriebenen Ausführungsbeispiel.

## Patentansprüche

1. Empfänger mit einer Vorrichtung zur Erzeugung einer individuellen Programmvorschau aus Signalen, die einer Programmübersicht über eine Vielzahl von Fernsehprogrammen entsprechen, mit
- einem Empfangsteil (1),
- einer Bedieneinheit (2),
- einer Recheneinheit (4) zur Ermittlung einer individuellen Programmvorschau entsprechend einem individuellen Interessenprofil eines Benutzes aus den der Programmübersicht entsprechenden Signalen, und
- einer nichtflüchtigen Speichereinheit (10) zur Abspeicherung von Signalen, die der individuellen Programmvorschau entsprechen,
**dadurch gekennzeichnet, daß**
- am Ausgang des Empfangsteils (1) ein gemäß dem MPEG-Standard aufgebauter Datenstrom vorliegt, welcher im Zeitmultiplex digitale Bild-, Ton- und Datensignale einer Vielzahl von Femsehprogrammen sowie Programmvorschausignale enthält, die der Programmübersicht über die Vielzahl von Fernsehprogrammen entsprechen,
- der Ausgang des Empfangsteils (1 ) mit dem Eingang eines Demultiplexers (3) verbunden ist,
- am Ausgang des Demultiplexers (3) die Programmvorschausignale zur Verfügung stehen, und die Recheneinheit (4) derart programmiert ist, daß sie dann, wenn sich der Empfänger im eingeschalteten Zustand oder im Bereitschaftsbetrieb befindet, die Ermittlung der individuellen Programmvorschau kontinuierlich durchführt.

2. Empfänger nach Anspruch 1,
**dadurch gekennzeichnet, daß**
mittels der Bedieneinheit (2) Daten eingebbar sind, die dem individuellen Interessenprofil des Benutzers entsprechen.

3. Empfänger nach Anspruch 2,
**dadurch gekennzeichnet, daß**
mehrere Datensätze, die den individuellen Interessenprofilen mehrerer Benutzer entsprechen, mittels der Bedieneinheit (2) eingebbar sind.

4. Empfänger nach Anspruch 1,
**dadurch gekennzeichnet, daß**
die Recheneinheit (4) derart programmiert ist, daß sie durch Auswertung der Sehgewohnheiten des Benutzers automatisch Daten ermittelt, die dem individuellen Interessenprofil des Benutzers entsprechen.

5. Empfänger nach einem oder mehreren der vorhergehenden Ansprüche,
**dadurch gekennzeichnet, daß**
der Empfänger eine Vorrichtung (4, 7, 12) zur Erzeugung eines optischen und/oder akustischen Signals aufweist, das den Benutzer auf den bevorstehenden Beginn einer seinem individuellen Interessenprofil zugehörigen Sendung aufmerksam macht.

6. Empfänger nach einem oder mehreren der vorhergehenden Ansprüche,
**dadurch gekennzeichnet, daß**
die Bedieneinheit (2) eine Taste aufweist, durch deren Betätigung die Anzeige der individuellen Programmvorschau auf der Anzeigeeinheit ausgelöst wird.

7. Empfänger nach einem oder mehreren der vorhergehenden Ansprüche,
**dadurch gekennzeichnet, daß**
die Recheneinheit (4) nach dem Einschalten des Empfängers die automatische Anzeige der individuellen Programmvorschau auf einer Anzeige initiiert.

8. Empfänger nach einem oder mehreren der vorhergehenden Ansprüche,
**dadurch gekennzeichnet, daß**
die Recheneinheit (4) automatisch erkennt, ob zum Zeitpunkt des Beginns einer dem individuellen Interessenprofil des Benutzers zugehörigen Sendung der Empfänger zum Empfang dieser Sendung eingeschaltet ist oder nicht und wenn dies nicht der Fall ist, eine Ein- und/oder Umschaltung des Empfängers zur Wiedergabe der genannten Sendung auf dem Bildschirm oder zur Aufzeichnung der genannten Sendung auf einen Aufzeichnungsträger initiiert.

9. Empfänger nach einem oder mehreren der vorhergehenden Ansprüche,
**dadurch gekennzeichnet, daß**
die Recheneinheit (4) derart programmiert ist, daß sie in Ansprache auf einen Bedienbefehl Signale, die der individuellen Programmvorschau entsprechen, an einem Ausgang des Empfängers zur Verfügung stellt.

## Claims

1. Receiver having a device for the generation of an individual programme preview from signals which correspond to a programme summary for a multiplicity of television programmes, comprising
- a receiving section (1),
- a control unit (2),
- a computer (4) for determining an individual programme preview corresponding to an individual interest profile of a user from the signals corresponding to the programme summary, and
- a non-volatile memory unit (10) for storing signals which correspond to the individual programme preview,
characterized in that
- there is present at the output of the receiving section (1) a data stream which is structured in accordance with the MPEG standard and which contains, in time-division multiplex, digital picture, sound and data signals of a multiplicity of television programmes and also programme preview signals which correspond to the programme summary for the multiplicity of television programmes,
- the output of the receiving section (1) is connected to the input of a demultiplexer (3),
- the programme preview signals are available at the output of the demultiplexer (3) and the computer (4) is programmed in such a way that it determines the individual programme preview continuously if the receiver is in the switched-on state or in the standby mode.

2. Receiver according to Claim 1, characterized in that data which correspond to the individual interest profile of the user can be entered by means of the control unit (2).

3. Receiver according to Claim 2, characterized in that a plurality of data records corresponding to the individual interest profiles of a plurality of users can be entered by means of the control unit (2).

4. Receiver according to Claim 1, characterized in that the computer (4) is programmed in such a way that, as a result of evaluating the viewing habits of the user, it automatically determines data which correspond to the individual interest profile of the user.

5. Receiver according to one or more of the preceding claims, characterized in that the receiver has a device (4, 7, 12) for generating a visible and/or audible signal which draws the attention of the user to the imminent start of a broadcast associated with his individual interest profile.

6. Receiver according to one or more of the preceding claims, characterized in that the control unit (2) has a key whose actuation initiates the display of the individual programme preview on the display unit.

7. Receiver according to one or more of the preceding claims, characterized in that, after the receiver is switched on, the computer (4) initiates the automatic display of the individual programme preview on a display.

8. Receiver according to one or more of the preceding claims, characterized in that the computer unit (4) automatically detects whether, at the time when a broadcast associated with the individual interest profile of the user starts, the receiver is switched on to receive said broadcast or not and, if that is not the case, initiates switching the receiver on and/or over to reproducing the said broadcast on the picture screen or to recording the said broadcast on a recording medium.

9. Receiver according to one or more of the preceding claims, characterized in that the computer (4) is programmed in such a way that, in response to a control instruction, it provides, at an output of the receiver, signals which correspond to the individual programme preview.

## Revendications

1. Récepteur comportant un dispositif pour former un aperçu individuel de programmes à partir de signaux, qui correspondent à une vue d'ensemble d'une multiplicité de programmes de télévision, comportant :
- une partie de réception (1),
- une unité de commande (2),
- une unité de calcul (4) pour déterminer un aperçu individuel de programmes conformément à un profil individuel d'intérêts d'un utilisateur à partir des signaux correspondant à la vue d'ensemble des programmes, et
- une unité de mémoire non volatile (10) servant à mémoriser des signaux, qui correspondent à l'aperçu individuel de programmes,
caractérisé en ce que
- à la sortie de la partie de réception (1) est présent un flux de données, qui est constitué par conformément à la norme MPEG et qui contient, dans le mode de multiplexage temporel, des signaux numériques d'images, de sons et de données d'une multiplicité de programmes de télévision ainsi que des signaux de l'aperçu de programmes, qui correspondent à la vue d'ensemble de la multiplicité de programmes de télévision,
- la sortie de la partie de réception (1) est reliée à l'entrée d'un démultiplexeur (3),
- les signaux de l'aperçu de programmes sont disponibles à la sortie du démultiplexeur (3) et l'unité de calcul (4) est programmée de telle sorte que, lorsque le récepteur est à l'état branché ou dans un état de disponibilité, la détermination de l'aperçu individuel de programmes est exécutée d'une manière continue.

2. Récepteur selon la revendication 1, caractérisé en ce que des données, qui correspondent au profil individuel d'intérêts de l'utilisateur, peuvent être introduites à l'aide de l'unité de commande (2).

3. Récepteur selon la revendication 2, caractérisé en ce que plusieurs ensembles de données, qui correspondent aux profils individuels d'intérêts de plusieurs utilisateurs, peuvent être introduits au moyen de l'unité de commande (2).

4. Récepteur selon la revendication 1, caractérisé en ce que l'unité de calcul (4) est programmée de telle sorte qu'elle détermine, automatiquement, par exploitation des habitudes télévisuelles de l'utilisateur, des données qui correspondent au profil individuel d'intérêts de l'utilisateur.

5. Récepteur selon une ou plusieurs des revendications précédentes, caractérisé en ce que le récepteur comporte un dispositif (4,7,12) servant à produire un signal optique et/ou acoustique, qui signale à l'utilisateur le début imminent d'une émission associée au profil individuel d'intérêts de l'utilisateur.

6. Récepteur selon une ou plusieurs des revendications précédentes, caractérisé en ce que l'unité de commande (2) comporte une touche, dont l'actionnement déclenche l'affichage de l'aperçu individuel de programmes sur l'unité d'affichage.

7. Récepteur selon une ou plusieurs des revendications précédentes, caractérisé en ce qu'après le branchement du récepteur, l'unité de calcul (4) déclenche l'affichage automatique de l'aperçu individuel de programmes sur une unité d'affichage.

8. Récepteur selon une ou plusieurs des revendications précédentes, caractérisé en ce que l'unité de calcul (4) identifie automatiquement si à l'instant du début d'une émission, associée au profil individuel d'intérêts de l'utilisateur, le récepteur est branché ou non pour la réception de cette émission et, lorsque ce n'est pas le cas, déclenche le branchement et/ou une commutation du récepteur pour la production de l'émission indiquée sur l'écran ou pour l'enregistrement de l'émission indiquée sur un support d'enregistrement.

9. Récepteur selon une ou plusieurs des revendications précédentes, caractérisé en ce que l'unité de calcul (4) est programmée de telle sorte qu'en réponse à une instruction de commande, elle délivre des signaux, qui correspondent à l'éventail individuel de programmes, sur une sortie du récepteur.
